# NEUE EUROPÄISCHE PATENTSCHRIFT

(11) **EP 1 252 245 B2**
(45) Veröffentlichungstag und Bekanntmachung des Hinweises auf die Entscheidung über den Einspruch: **05.11.2008**
(45) Hinweis auf die Patenterteilung: 26.01.2005
(21) Anmeldenummer: 01900460.5
(22) Anmeldetag: 25.01.2001
(51) Int. Cl.: C09D 167/07, C09D 175/16, C09D 201/00, B05D 3/02

(54) **VERFAHREN ZUR HERSTELLUNG VON BESCHICHTUNGEN, KLEBSCHICHTEN ODER DICHTUNGEN FÜR GRUNDIERTE ODER UNGRUNDIERTE SUBSTRATE**
METHOD FOR PRODUCING COATINGS, ADHESIVE LAYERS OR SEALING SYSTEMS FOR PRIMED OR UNPRIMED SUBSTRATES
PROCEDE DE PRODUCTION DE REVETEMENTS, COUCHES DE COLLE OU SYSTEMES D'ETANCHEITE POUR DES SUBSTRATS AVEC OU SANS COUCHE DE FOND

(30) Priorität: 02.02.2000 DE 10004495
(43) Veröffentlichungstag der Anmeldung: 30.10.2002
(73) Patentinhaber: BASF SE, 67056 Ludwigshafen (DE)
(72) Erfinder: BLUM, Rainer, 67069 Ludwigshafen (DE); SCHWALM, Reinhold, 67157 Wachenheim (DE); STEPHAN, Oskar, 68766 Hockenheim (DE)
(74) Vertreter: Fitzner, Uwe
(86) Internationale Anmeldenummer: PCT/EP2001/000445
(87) Internationale Veröffentlichungsnummer: WO 2001/057149

(56) Entgegenhaltungen:
- WO-A-99/41323
- DE-A- 3 924 679
- US-A- 5 387 442
- PATENT ABSTRACTS OF JAPAN vol. 008, no. 102 (C-222), 12. Mai 1984 (1984-05-12) & JP 59 016571 A (NIPPON PAINT KK), 27. Januar 1984 (1984-01-27)
- BAER ET AL: "Crosslinking of powder paints in a few seconds" STN CAPLUS,XX,XX, Bd. 128, Nr. 12, 23. März 1998 (1998-03-23), XP002154198
- 'Powder Coating Europe', 1998 Seiten 71 - 81
- DR. HELLMUTH KESSLER, DR. HANS FRIEDRICH SARX, DR. ERNST SCHNEIDER: 'Lackkunstharze', 1971, CARL HANSER VERLAG, MUENCHEN
- 'Britsh Plastics lications.', Februar 1961 Artikel T.L. PHILLIPS: 'Polyester resins for coating applications', Seiten 69 - 72
- THIEME: 'Römpp Chemie Lexikon', Artikel J. FALBE, M. REGITZ, Seite 956
- THIEME: 'Römpp Chemie Lexikon', Artikel J. FALBE, M. REGITZ, Seiten 1980 - 1981

## Beschreibung

Die vorliegende Erfindung betrifft ein neues Verfahren zur Herstellung von Beschichtungen, Klebschichten oder Dichtungen für grundierte oder ungrundierte Substrate aus radikalisch und/oder ionisch härtbaren Beschichtungsstoffen, Klebstoffen oder Dichtungsmassen durch Bestrahlung. Außerdem betrifft die vorliegende Erfindung die grundierten oder ungrundierten Substrate, die mindestens eine Beschichtung, eine Klebschicht und/oder eine Dichtung, hergestellt nach dem neuen Verfahren, aufweisen.

Radikalisch und/oder ionisch härtbare Beschichtungsstoffe, Klebstoffe und Dichtungsmassen, insbesondere aber Beschichtungsstoffe, die mindestens einen Bestandteil (A) enthalten, der im statistischen Mittel mindestens eine Gruppe (a) mit mindestens einer mit aktinischer Strahlung aktivierbaren Bindung pro Molekül enthält, sowie die Bestandteile (A) als solche sind seit langem bekannt und werden in zahlreichen Patentschriften beschrieben. Beispielhaft wird auf die europäischen Patentschriften EP 0 928 800 A1, 0 636 669 A1, 0 410 242 A1, 0 783 534 A1, 0 650 978 A1,0 650 979 A1, 0 650 985 A1, 0 540 884 A1, 0 568 907 A1, 0 054 505 A1 oder 0 002 866 A1, die deutschen Patentschriften DE 197 09 467 A1, 42 03 278 A1, 33 16 593 A1, 38 36 370 A1, 24 36 186 A1 oder 20 03 579 B1, die internationalen Patentanmeldungen WO 97/46549 oder 99/14254 oder die amerikanischen Patentschriften US 4,675,234 A1, 4,634,602 A1, 4,424,252 A1, 4,163,810 A1, 4,129,488 A1 oder 3,974,303 A1 verwiesen. Die bekannten Beschichtungsstoffe können in der Form von wasserfreien und lösemittelfreien Flüssigkeiten und Schmelzen (sogenannte 100%-Systeme), von Pulvern oder in Form von Dispersionen oder Lösungen in mindestens einem organischen Lösemittel vorliegen. Dies gilt auch für die bekannten Klebstoffe und Dichtungsmassen.

Unter aktinischer Strahlung wird hier und im folgenden elektromagnetische Strahlung wie sichtbares Licht, UV-Strahlung oder Röntgenstrahlung, insbesondere aber UV-Strahlung, und Korpuskularstrahlung wie Elektronenstrahlung verstanden. Wegen des vergleichsweise geringen apparativen Aufwands der UV-Härtung werden vor allem Beschichtungsstoffe, Klebstoffe und Dichtungsmassen angewandt, die mit UV-Strahlung härtbar sind.

An und für sich zeichnen sich Beschichtungsstoffe, Klebstoffe und Dichtungsmassen, die mit UV-Strahlung härtbar sind, durch besondere Vorteile, wie eine kurze Taktzeit, einen geringen Energieverbrauch bei der Härtung und die Möglichkeit der Beschichtung, Verklebung und Abdichtung thermisch empfindlicher Substrate, aus. Indes weisen sie dabei noch immer ganz spezifische Nachteile auf.

So enthalten die bekannten radikalisch und/oder ionisch härtbaren Beschichtungsstoffe, Klebstoffe und Dichtungsmassen Photoinitiatoren, die beim Bestrahlen mit UV-Strahlung Radikale oder Kationen bilden, die die radikalische oder ionische Polymerisation oder Vernetzung des Bestandteils (A) initiieren (vgl. hierzu Römpp Chemie Lexikon Lacke und Druckfarben, Georg Thieme Verlag, Stuttgart, New York, 1998, »Photoinitiatoren«, Seiten 444 bis 446). Nachteilig ist hierbei, daß die Photoinitiatoren Zerfallsprodukte liefern, die einen unangenehmen Geruch aufweisen und/oder gefärbt sind. Dies führt zu unerwünschten Emissionen und zur Vergilbung der Beschichtungen, Klebstoffe und Dichtungsmassen, was insbesondere bei dekorativen Beschichtungen oder verklebten Glasplatten nicht akzeptabel ist. Außerdem erfordert die Anwesenheit von Photoinitiatoren die Herstellung und die Applikation der Beschichtungsstoffe, Klebstoffe und Dichtungsmassen unter Ausschluß des UV-Anteils des sichtbaren Lichts, was einen erheblichen logistischen und apparativen Aufwand erfordert. Darüber hinaus sind die Photoinitiatoren häufig teuer, weswegen ihre Verwendung wirtschaftlich von Nachteil ist.

Ein weiterer wesentlicher Nachteil der UV-Härtung ist die Bildung von Ozon bei der Bestrahlung. Ozon ist aber hochgiftig und vermag auch die Oberfläche der Beschichtungen, Klebstoffe und Dichtungen zu beschädigen. Es muß deshalb abgesaugt werden, was einen zusätzlichen apparativen Aufwand darstellt.

Die Photopolymerisation kann des weiteren durch Luftsauerstoff inhibiert werden weswegen entweder unter Luftausschluß gearbeitet werden muß, oder aber die Inhibierung muß durch eine sehr hohe Initiatorkonzentration oder durch sogenannte Coinitiatoren kompensiert werden. Trotzdem lassen sich häufig nicht die erforderlichen Oberflächeneigenschaften realisieren.

Es besteht daher ein Bedarf nach einem Verfahren zur Herstellung von Beschichtungen, Klebschichten oder Dichtungen aus radikalisch und/oder ionisch härtbaren Beschichtungsstoffen, Klebstoffen oder Dichtungsmassen der vorstehend beschriebenen Art, das die geschilderten Nachteile nicht mehr länger aufweisen soll, wohl aber die geschilderten Vorteile.

Aus den japanischen Patentanmeldungen JP 08 188 632 A1, 07 228 789 A1, 09 302 262 A1, 01 064 761 A1, 09 052 068 A1 oder 08 206 584 A1 oder den europäischen Patentanmeldungen EP 0 774 492 A1 oder 0 889 363 A1 sind radikalisch und/oder ionisch härtbare Beschichtungsstoffe bekannt, die Bestandteile mit photopolymerisierbaren olefinisch ungesättigten Bindungen enthalten. Diese Beschichtungsstoffe können mit naher Infrarotstrahlung (NIR-Strahlung) gehärtet werden. Voraussetzung hierfür ist aber die Verwendung von Farbstoffen, die NIR-Strahlung absorbieren und so als Initiatoren der Photopolymerisation wirken. Diese führen aber zur ähnlichen Problemen, wie sie bei konventionellen Photoinitiatoren auftreten. Diese wiegen besonders schwer bei dekorativen Beschichtungen oder Klarlackierungen oder bei Klebschichten zwischen Glasplatten. Daher liegt der Hauptverwendungszweck, beispielsweise der aus der europäischen Patentschrift EP 0 889 363 A1 bekannten Zusammensetzungen, auf dem Gebiet der bildmäßigen Belichtung zur Herstellung von Photoresists, Druckplatten oder holographischen Filmen, bei denen ein gewisser Gehalt an Farbstoffen nicht störend wirkt, sondern im Gegenteil den Bildkontrast noch verstärkt.

Aufgabe der vorliegenden Erfindung ist es, den vorstehend beschriebenen Bedarf zu decken und ein neues Verfahren zur Herstellung von Beschichtungen, Klebschichten und Dichtungen aus an sich bekannten radikalisch und/oder ionisch härtbaren Beschichtungsstoffen, Klebstoffen und Dichtungsmassen zu finden, das die Nachteile des Standes der Technik, wie die auf die Verwendung von Photoinitiatoren zurückgehende Geruchsbelästigung und Vergilbung, das Arbeiten unter Ausschluß des UV-Anteils des sichtbaren Lichts sowie die auf die Verwendung von UV-Strahlung zurückgehende Bildung von Ozon nicht mehr länger aufweist und ohne Farbstoffe, die NIR-Strahlung absorbieren, auskommt. Dabei soll das neue Verfahren die besonderen Vorteile der bekannten Beschichtungsstoffe, Klebstoffen und Dichtungsmassen, wie eine kurze Taktzeit, einen geringen Energieverbrauch bei der Härtung und die Möglichkeit der Beschichtung, Verklebung und Abdichtung thermisch empfindlicher Substrate, weiterhin aufweisen.

Demgemäß wurde das neue Verfahren zur Herstellung von Beschichtungen, Klebschichten oder Dichtungen für grundierte oder ungrundierte Substrate gefunden, bei dem man
(1) mindestens einen radikalisch und/oder ionisch härtbaren Beschichtungsstoff und/oder Klebstoff und/oder mindestens eine radikalisch und/oder ionisch härtbare Dichtungsmasse, enthaltend mindestens einen Bestandteil (A), der im statistischen Mittel mindestens eine Gruppe (a) mit mindestens einer mit aktinischer Strahlung aktivierbaren Bindung pro Molekül, enthält, wobei es sich bei den mit aktinischer Strahlung aktivierbaren Bindungen um Kohlenstoff-Kohlenstoff-Doppelbindungen handelt in der Form
   (1.1) einer wasserfreien und lösemittelfreien Flüssigkeit oder Schmelze,
   (1.2) eines Pulvers,
   (1.3) einer Dispersion oder einer Lösung in mindestens einem organischen Lösemittel oder
   (1.4) einer Dispersion oder einer Lösung in einem wäßrigen Medium
   auf und/oder in das grundierte oder ungrundierte Substrat appliziert,
(2) die resultierende Schicht aus einer Dispersion oder einer Lösung (1.3) oder (1.4) trocknet oder die resultierende Schicht der Schmelze (1.1) erstarren läßt oder durch Erhitzen weiterhin in geschmolzenem Zustand hält,
(3) die resultierende feste Schicht (1.2), (1.3) oder (1.4) durch Erhitzen aufschmilzt und
(4) die im Verfahrensschritt (1) resultierende flüssige oder die im Verfahrensschritt (2) oder (3) resultierende geschmolzene Schicht
   (4.1) im flüssigen oder geschmolzenen Zustand,
   (4.2) beim Erstarren und/oder
   (4.3) nach dem Erstarren
   mit naher Infrarotstrahlung (NIR-Strahlung) härtet,
   ohne daß Photoinitiatoren und NIR-Strahlung absorbierende Farbstoffe zugegen sind, und
   wobei die Gruppen (a) in dem Bestandteil (A) über Urethangruppen an die Grundstruktur gebunden sind.

Im folgenden wird das neue Verfahren zur Herstellung von Beschichtungen, Klebschichten oder Dichtungen für grundierte oder ungrundierte Substrate als "erfindungsgemäßes Verfahren" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die Lösung der Aufgabe, die der vorliegenden Erfindung zugrunde liegt, mit Hilfe des erfindungsgemäßen Verfahrens gelöst werden konnte. Insbesondere überraschte, daß mit Hilfe des erfindungsgemäßen Verfahrens an sich bekannte Beschichtungsstoffe, Klebstoffe und Dichtungsmassen radikalisch und/oder ionisch vernetzt werden können, ohne daß Photoinitiatoren und NIR-Strahlung absorbierende Farbstoffe zugegen sind. Noch mehr überraschte die außerordentlich breite Verwendbarkeit des erfindungsgemäßen Verfahrens, insbesondere auf dem Gebiet der Beschichtung von grundierten und ungrundierten Substraten.

Das erfindungsgemäße Verfahren dient der Beschichtungen, dem Verkleben und/oder dem Abdichten von grundierten oder ungrundierten Substraten.

Als Substrate kommen alle Oberflächen von Gegenständen in Betracht, die einer Härtung der hierauf befindlichen Schichten aus Beschichtungsstoffen, Klebstoffen und/oder Dichtungsmassen unter Anwendung von Hitze und/oder aktinischer Strahlung zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist das erfindungsgemäße Verfahren für die Beschichtung, das Verkleben oder das Abdichten von Kraftfahrzeugkarosserien, von Möbeln und Bauteilen für den privaten oder industriellen Gebrauch, wie Radiatoren, Haushaltsgeräte, Kleinteile aus Metall, Radkappen, Felgen, Coils, Container und elektrotechnische Bauteile, wie Wicklungen von elektrischen Motoren, in hohem Maße geeignet.

Die hierbei angewandten metallischen Substrate können eine Grundierung, insbesondere eine kathodisch (KTL) oder anodisch (ATL) abgeschiedene und thermisch gehärtete Elektrotauchlackierung (ETL) aufweisen. Gegebenenfalls kann die Elektrotauchlackierung noch mit einer Steinschlagschutzgrundierung oder einem Füller beschichtet sein.

Das erfindungsgemäße Verfahren dient insbesondere auch der Beschichtung, dem Verkleben oder dem Abdichten grundierter oder nicht grundierter Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1). Die Kunststoffe können selbstverständlich auch Polymerblends, modifizierte Kunststoffe oder faserverstärkte Kunststoffe sein. Im Falle von nichtfunktionalisierten und/oder unpolaren Kunststoffoberflächen können diese vor der Beschichtung in bekannter Weise einer Vorbehandlung mit einem Plasma oder mit Beflammen unterzogen und/oder mit einer Hydrogrundierung aus einem Hydroprimer beschichtet werden.

Im Verfahrensschritt (1) des erfindungsgemäßen Verfahrens wird mindestens ein Beschichtungsstoff, ein Klebstoffe und/oder eine Dichtungsmasse auf und/oder in das vorstehend beschriebene Substrat appliziert.

Die Applikation kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende, zu verklebende oder abzudichtende Substrat als solches ruhen, wobei die Applikationseinrichtung oder -anlage bewegt wird. Indes kann auch das zu beschichtende, zu verklebende oder abzudichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs, des Klebstoffs oder der Dichtungsmasse und des gegebenenfalls wiederaufzubereitenden Overspray eintreten. So kann das Heißspritzen so ausgestaltet sein, daß der Beschichtungsstoff, der Klebstoff oder die Dichtungsmasse nur sehr kurz in der oder kurz vor der Spritzdüse erhitzt werden.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem erfindungsgemäß zu verwendenden Beschichtungsstoff selbst, betrieben wird.

Der Beschichtungsstoff, der Klebstoff und die Dichtungsmasse können dabei in der Form einer wasserfreien und lösemittelfreien Flüssigkeit oder Schmelze (1.1) vorliegen. Im Rahmen der vorliegenden Erfindung wird unter einer Flüssigkeit ein Stoff verstanden, der bei Raumtemperatur flüssig ist. Demgegenüber wird unter einer Schmelze ein Stoff verstanden, der bei Raumtemperatur fest ist und der sich erst oberhalb der Raumtemperatur verflüssigt. Beschichtungsstoffe, Klebstoffe oder Dichtungsmassen (1.1) dieser Art werden von der Fachwelt auch als 100%-Systeme bezeichnet.

Der Beschichtungsstoff, der Klebstoff und die Dichtungsmasse können außerdem in der Form eines Pulvers (1.2) vorliegen. Beschichtungsstoffe (1.2) dieser Art werden von der Fachwelt bekanntermaßen als Pulverlacke bezeichnet.

Des weiteren können die Beschichtungsstoffe, Klebstoffe und Dichtungsmassen in der Form einer Dispersion oder einer Lösung in mindestens einem organischen Lösemittel (1.3) vorliegen. Beschichtungsstoffe (1.3) dieser Art werden von der Fachwelt bekanntermaßen als konventionelle Beschichtungsstoffe bezeichnet.

Nicht zuletzt können die Beschichtungsstoffe, Klebstoffe und Dichtungsmassen in der Form einer Dispersion oder einer Lösung (1.4) in mindestens einem wäßrigen Medium vorliegen. Beschichtungsstoffe dieser Art werden von der Fachwelt bekanntermaßen als wäßrige Beschichtungsstoffe bezeichnet.

Im Rahmen des erfindungsgemäßen Verfahrens wird im Verfahrensschritt (2) die resultierende Schicht aus einer Dispersion oder einer Lösung (1.3) oder (1.4) getrocknet.

Werden Beschichtungsstoffe, Klebstoffe oder Dichtungsmassen (1.1) in Form einer Schmelze verwendet, läßt man die resultierende Schicht (1.1) erstarren oder hält sie durch Erhitzen weiterhin in geschmolzenem Zustand. Hierbei kann die Schicht (1.1) in üblicher und bekannter Weise mit heißer Luft, beispielsweise in Umluftöfen, oder mit konventionellen Infrarotlampen erhitzt werden. Erfindungsgemäß ist es von Vorteil auch in diesem Verfahrensschritt (2) NIR-Strahlung zu verwenden.

Werden Beschichtungsstoffe, Klebstoffe oder Dichtungsmassen (1.2), (1.3) oder (1.4) verwendet, wird die in dem Verfahrensschritt (3) resultierende feste Schicht (1.2), (1.3) oder (1.4) durch Erhitzen aufgeschmolzen. Auch hierbei kann die Schicht (1.2), (1.3) oder (1.4) in üblicher und bekannter Weise mit heißer Luft, beispielsweise in Umluftöfen, oder mit konventionellen Infrarotlampen erhitzt werden. Erfindungsgemäß ist es von Vorteil auch in diesem Verfahrensschritt (3) NIR-Strahlung zu verwenden.

Im erfindungsgemäßen Verfahrensschritt (4) wird die im Verfahrensschritt (1) resultierende flüssige Schicht (1.1) oder die im Verfahrensschritt (2) oder (3) resultierende geschmolzene Schicht (1.2), (1.3) oder (1.4) in geschmolzenem Zustand, beim Erstarren und/oder nach dem Erstarren mit naher Infrarotstrahlung (NIR-Strahlung) gehärtet, wodurch die Beschichtungen, Klebschichten und Dichtungen resultieren.

Erfindungsgemäß ist es von Vorteil, NIR-Strahlung einer Wellenlänge zu verwenden, für die die festen Schichten (1.2), (1.3) und (1.4), die Flüssigkeiten und Schmelzen (1.1) sowie die im Verfahrensschritt (4) resultierenden Schmelzen teilweise durchlässig sind. Besondere Vorteile resultieren, wenn die eingestrahlte NIR-Strahlung zu 20 bis 80%, insbesondere zu 40 bis 70%, absorbiert wird. Dies wird vorzugsweise durch NIR-Strahlung einer Wellenlänge von 600 bis 1.400 nm, insbesondere 750 bis 1.100 nm, erzielt, weswegen diese ganz besonders bevorzugt für das erfindungsgemäße Verfahren verwendet wird.

Methodisch und apparativ gesehen weist der erfindungsgemäße Verfahrensschritt (4) keine Besonderheiten auf, sondern erfolgt mit Hilfe, kommerziell erhältlicher Strahler, die einen hohen Anteil ihrer Strahlung im nahen Infrarot emittieren. Beispiele geeigneter Strahler sind Halogenstrahler mit hoher Glühwendeltemperatur wie sie beispielsweise von der Firma Ushio Inc., Tokio, Japan, oder der Firma IndustrieService, Deutschland, vertrieben werden.

Vorteilhafterweise kann hierbei die NIR-Strahlung durch optische Einrichtungen so gelenkt und fokussiert werden, daß eine Temperaturverteilung erreicht wird, die der Härtungscharakteristik der Beschichtungsstoffe, Klebstoffe und Dichtungsmassen angepaßt ist. Außerdem kann die auf die applizierten Beschichtungsstoffe, Klebstoffe und Dichtungsmassen einwirkende Strahlungsenergie und/oder die Wellenlänge der NIR-Strahlung durch elektrische Regelung der Strahler und/oder durch optische Filtereinrichtungen genau eingestellt werden. Ergänzend wird auf die deutsche Patentschrift DE 197 36 462 A1, Spalte 1, Zeile 52, bis Spalte 2, Zeile 33, verwiesen.

Der Fachmann kann daher die für den jeweiligen Fall vorteilhaften Parameter aufgrund seines Fachwissens gegebenenfalls unter Zuhilfenahme einfacher orientierender Vorversuche leicht ermitteln.

Die in dem erfindungsgemäßen Verfahren anzuwendenden Beschichtungsstoffe, Klebstoffe und Dichtungsmassen enthalten mindestens einen Bestandteil (A), der im statistischen Mittel mindestens eine, vorzugsweise mindestens zwei, Gruppe(n) (a) mit mindestens einer mit aktinischer Strahlung aktivierbaren Bindung(en) pro Molekül aufweist.

Im Rahmen der vorliegenden Erfindung wird unter einer mit aktinischer Strahlung aktivierbaren Bindung eine Kohlenstoff-Kohlenstoff-Doppelbindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Der Kürze halber wird sie im folgenden als "Doppelbindung" bezeichnet.

Demnach enthält die erfindungsgemäß bevorzugte Gruppe (a) eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der Gruppe (a) vorliegen. Erfindungsgemäß ist es von besonderem Vorteil zwei, insbesondere eine, Doppelbindung zu verwenden.

Desweiteren enthält der Bestandteil (A) im statistischen Mittel mindestens eine Gruppe (a). Dies bedeutet, daß die Funktionalität des Bestandteil (A) ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich einerseits nach den stöchiometrischen Verhältnissen der Ausgangsprodukte der Bestandteile (A), die sich andererseits wieder nach deren Anwendungszwecken richten.

Werden im statistischen Mittel mehr als eine Gruppe (a) pro Molekül angewandt, sind die mindestens zwei Gruppen (a) strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, Gruppen (a) verwendet werden, die sich von zwei, drei, vier oder mehr, insbesondere aber zwei, Monomerklassen ableiten.

Beispiele geeigneter Gruppen (a) sind (Meth)Acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise ist der Bestandteil (A) ein Feststoff, weil hierdurch Beschichtungsstoffe, Klebstoffe und Dichtungsmassen (1.1) oder (1.3) resultieren, die besonders gut für das erfindungsgemäßen Verfahren sind. Der Feststoff kann amorph, teilkristallin oder kristallin sein. Welche Variante für das erfindungsgemäßen Verfahren eingesetzt wird, richtet sich nach den Erfordernissen des Einzelfalls.

Weitere besondere Vorteile resultieren, wenn der lösemittelfreie oder wasserfreie Bestandteil (A) ein Schmelzintervall oder einen Schmelzpunkt im Temperaturbereich von 40 bis 130°C aufweist. Erfindungsgemäß ist es des weiteren von Vorteil, wenn der lösemittelfreie oder wasserfreie Bestandteil (A) bei 130°C eine Schmelzeviskosität von 50 bis 20.000 mPas aufweist.

Die Gruppen (a) sind über Urethangruppen an die Grundstruktur des Bestandteil (A) gebunden. Hierfür kommen die folgenden beiden verküpfenden Strukturen I und II in Betracht:

**Grundstruktur-NH-C(O)-O-Gruppe (a)** (I)

und

**Grundstruktur-O-(O)C-NH-Gruppe (a)** (II).

In dem Bestandteil (A) können beide verküpfenden Strukturen I und II oder nur eine von ihnen vorliegen. Im allgemeinen ist die Struktur I wegen der größeren Anzahl der zur Verfügung stehenden Ausgangsprodukte und deren vergleichsweise einfacheren Herstellbarkeit von Vorteil und wird deshalb erfindungsgemäß bevorzugt angewandt.

Die Gruppen (a) sind an die Grundstruktur endständig und/oder lateral gebunden. Welche Art der Anbindung gewählt wird, richtet sich insbesondere danach, ob die funktionellen Gruppen in der Grundstruktur, mit denen die Ausgangsprodukte der Gruppen (a) zu reagieren vermögen, endständig oder lateral vorliegen. Häufig haben endständige Gruppen (a) wegen fehlender sterischer Abschirmung eine höhere Reaktivität als laterale Gruppen (a) und werden deshalb bevorzugt verwendet. Andererseits aber kann die Reaktivität des erfindungsgemäßen Feststoffs über das Verhältnis von endständigen und lateralen Gruppen (a) gezielt gesteuert werden, was ein weiterer besonderer Vorteil des erfindungsgemäßen Feststoffs ist.

Die Grundstruktur des Bestandteils (A) ist niedermolekular, oligomer und/oder polymer. D.h., der Bestandteil (A) ist eine niedermolekulare Verbindung, ein Oligomer oder ein Polymer. Oder aber der Bestandteil (A) weist niedermolekulare und oligomere, niedermolekulare und polymere, oligomere und polymere oder niedermolekulare, oligomere und polymere Grundstrukturen auf, d.h., er ist ein Gemisch von niedermolekularen Verbindungen und Oligomeren, niedermolekularen Verbindungen und Polymeren, Oligomeren und Polymeren oder niedermolekularen Verbindungen, Oligomeren und Polymeren.

Im Rahmen der vorliegenden Erfindung werden unter Oligomeren Harze verstanden, die mindestens 2 bis 15 wiederkehrende Monomereinheiten in ihrem Molekül enthalten.. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Die niedermolekulare, oligomere oder polymere Grundstruktur enthält aromatische, cycloaliphatische und/oder aliphatische Strukuren bzw. Bausteine oder besteht aus diesen. Vorzugsweise enthält sie cycloaliphatische und/oder aliphatische Strukturen, insbesondere cycloaliphatische und aliphatische Strukturen, oder besteht aus diesen.

Beispiele geeigneter aromatischer Strukturen sind aromatische und heteroaromatische Ringe, insbesondere Benzolringe.

Beispiele cycloaliphatischer Stukturen sind Cyclobutan-, Cyclopentan-, Cyclohexan-, Cycloheptan-, Norbonan-, Camphan-, Cyclooctan- oder Tricyclodecanringe, insbesondere Cyclohexanringe.

Beispiele aliphatischer Strukturen sind linerare oder verzweigte Alkylketten mit 2 bis 20 Kohlenstoffatomen oder Ketten, wie sie aus der (Co)Polymerisation olefinisch ungesättigter Monomere resultieren.

Die Grundstruktur, insbesondere die oligomere und/oder polymere Grundstruktur, kann außerdem olefinisch ungesättigte Doppelbindungen enthalten.

Die Grundstruktur, insbesondere die oligomere und/oder polymere Grundstruktur, ist von linearer, verzweigter, hyperverzweigter oder dendrimerer Struktur.

Sie kann mehrbindige, insbesondere zweibindige, funktionelle Gruppen enthalten, durch die die vorstehend beschriebenen Strukturen bzw. Bausteine miteinander zu der Grundstruktur verknüpft werden. Diese werden im allgemeinen so ausgewählt, daß sie die durch die NIR-Strahlung ausgelösten Reaktionen nicht stören oder gar völlig verhindern. Beispiele geeigneter funktioneller Gruppen sind Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon-, Sulfoxid- oder Siloxangruppen. Von diesen Gruppen sind die Ether-, Carbonsäureester-, Carbonat-, Carbonsäureamid-, Harnstoff-, Urethan-, Imid- und Carbonatgruppen, insbesondere die Carbonsäureester- und die Urethangruppen, von Vorteil und werden deshalb bevorzugt verwendet.

Vorteilhafte oligomere und polymere Grundstrukturen leiten sich somit ab von statistisch, alternierend und/oder blockartig aufgebauten linearen, verzweigten, hyperverzweigten, dendrimeren und/oder kammartig aufgebauten (Co)Polymerisaten von ethylenisch ungesättigten Monomeren, Polyadditionsharzen und/oder Polykondensationsharzen. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter (Co)Polymerisate sind Poly(meth)acrylate und partiell verseifte Polyvinylester.

Beispiele gut geeigneter Polyadditionsharze und/oder Polykondensationsharze sind Polyester, Alkyde, Polyurethane, Polyester-Polyurethane, Polylactone, Polycarbonate, Polyether, Polyester-Polyether, Epoxidharz-Amin-Addukte, Polyharnstoffe, Polyamide oder Polyimide. Von diesen sind die Polyester, Polyester-Polyether, Polyurethane und Polyester-Polyurethane besonders vorteilhaft und werden deshalb erfindungsgemäß ganz besonders bevorzugt verwendet.

Die Grundstruktur kann laterale reaktive funktionelle Gruppen (b) tragen, die mit reaktiven funktionellen Gruppen (b) der eigenen Art oder mit anderen, komplementären, funktionellen Gruppen (c) thermisch initiierte Vernetzungsreaktionen eingehen können. Hierbei können die komplementären funktionellen Gruppen (b) und (c) in ein und derselben Grundstruktur vorliegen, was bei sogenannten selbstvernetzenden Systemen der Fall ist. Die funktionellen Gruppen (c) können indes auch in einem weiteren, stofflich von dem erfindungsgemäßen Feststoff verschiedenen Bestandteil, beispielsweise einem Vernetzungsmittel (B), vorliegen, was bei sogenannten fremdvernetzenden Systemen der Fall ist. Ergänzend wird auf Römpp Lexikon Lacke und Druckfarben, Georg Thieme Verlag, Stuttgart, New York, 1998, »Härtung«, Seiten 274 bis 276, verwiesen. Reaktive funktionelle Gruppen (b) und (c) werden insbesondere dann verwendet, wenn der Bestandteil (A) mit NIR-Strahlung und thermisch härtbar sein soll (Dual Cure). Sie werden so ausgewählt, daß sie die durch NIR-Strahlung ausgelöste Polymerisation oder Vernetzungsreaktion der Doppelbindungen der Gruppen (a) nicht stören oder gar völlig verhindern. Indes können reaktive funktionelle Gruppen (b) und (c), die an olefinisch ungesättigte Doppelbindungen addieren, in untergeordneten, d. h. in nicht störenden, Mengen mit verwendet werden.

Beispiele geeigneter komplementärer reaktiver funktioneller Gruppen (b) und (c) gehen aus der nachfolgenden Übersicht hervor.

**Übersicht: Komplementäre reaktive funktionelle Gruppen (b) und (c)**

| | | |
|---|---|---|
| **(b)** | **und** | **(c)** |
| | oder | |
| **(c)** | **und** | **(b)** |
| -SH | | -C(O)-OH |
| | | |
| -NH₂ | | -C(O)-O-C(O)- |
| | | |
| -OH | | -NCO |
| | | |
| -O-(CO)-NH-(CO)-NH₂ | | -NH-C(O)-OR |
| | | |
| -O-(CO-NH₂ | | -CH₂-OH |
| | | |
| | | -CH₂-O-CH₃ |
| | | |
| | | -NH-C(O)-CH(-C(O)OR)₂ |
| | | |
| | | -NH-C(O)-CH(-C(O)OR)(-C(O)-R) |
| | | |
| | | -NH-C(O)-NR¹R² |
| | | |
| | | = Si(OR)₂ |
| | | |
| | | 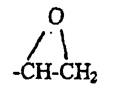 |
| -C(O)-OH | | 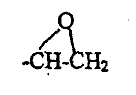 |
| -O-C(O)-CR=CH₂ | | -OH |
| | | |
| -O-CR=CH₂ | | -NH₂ |
| | | |
| | | -C(O)-CH₂-C(O)-R |

In der Übersicht steht die Variable R für einen acyclischen oder cyclischen aliphatischen, einen aromatischen und/oder einen aromatisch-aliphatischen (araliphatischen) Rest; die Variablen R¹ und R² stehen für gleiche oder verschiedene aliphatische Reste oder sind miteinander zu einem aliphatischen oder heteroaliphatischen Ring verknüpft.

Sofern die reaktiven komplementären Gruppen (b) und/oder (c) mit verwendet werden, sind sie in dem Bestandteil (A) vorzugsweise in einer Menge, entsprechend im statistischen Mittel 1 bis 4 Gruppen pro Molekül, enthalten.

Die Grundstruktur kann des weiteren chemisch gebundene Stabilisatoren (d) enthalten. Sofern sie mit verwendet werden, sind sie in dem Bestandteil (A) in einer Menge von 0,01 bis 1,0 Mol-%, vorzugsweise 0,02 bis 0,9 Mol-%, bevorzugt 0,03 bis 0,85 Mol-%, besonders bevorzugt 0,04 bis 0,8 Mol-%, ganz besonders bevorzugt 0,05 bis 0,75 Mol-% und insbesondere 0,06 bis 0,7 Mol-%, jeweils bezogenen auf die in dem Bestandteil (A) vorhandenen Doppelbindungen, enthalten. Die erfindungsgemäßen grundierten und ungrundierten Substrate, enthaltend mindestens eine Beschichtung, mindestens eine Klebschicht und/oder mindestens eine Dichtung, sind herstellbar nach dem erfindungsgemäßen Verfahren, wenn der Bestandteil (A) noch mindestens einen chemisch gebundenen Stabilisator (d) enthält.

Bei dem chemisch gebundenen Stabilisator (d) handelt es sich um Verbindungen, die sterische gehinderte Nitroxylradikale (>N-O•) sind oder liefern, die im modifizierten Denisov-Zyklus freie Radikale abfangen.

Beispiele geeigneter chemisch gebundener Stabilisatoren (d) sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist. Ergänzend wird auf das Lehrbuch »Lackadditive« von Johan Bieleman, Wiley-VCH, Weinheim, New York, 1998, Seiten 293 bis 295, verwiesen.

Beispiele geeigneter Ausgangsprodukte (d) für die Einführung der chemisch gebundenen Stabilisatoren (d) sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist und die eine Isocyanatgruppe oder eine isocyanatreaktive funktionelle Gruppe (b) oder (c), insbesondere eine Hydroxylgruppe, enthalten. Ein Beispiel für ein besonders gut geeignetes Ausgangsprodukt (d) ist das Nitroxylradikal 2,2,6,6-Tetramethyl-4-hydroxy-piperidin-N-oxid.

Die Herstellung der erfindungsgemäß zu verwendenden Bestandteile (A) weist keine methodischen Besonderheiten auf, sondern erfolgt mit Hilfe der üblichen und bekannten Synthesemethoden der niedermolekularen organischen Chemie und/oder der Polymerchemie. Es können die üblichen und bekannten Methoden der Polyaddition und/oder Polykondensation angewandt werden. Beispielhaft wird auf die eingangs zitierten europäischen Patentschriften EP 0 928 800 A1, 0 636 669 A1, 0 410 242 A1, 0 783 534 A1, 0 650 978 A1, 0 650 979 A1, 0 650 985 A1, 0 540 884 A1, 0 568 907 A1, 0 054 505 A1 oder 0 002 866 A1, die deutschen Patentschriften DE 197 09 467 A1, 42 03 278 A1, 33 16 593 A1, 38 36 370 A1, 24 36 186 A1 oder 20 03 579 B1, die internationalen Patentanmeldungen WO 97/46549 oder 99/14254 oder die amerikanischen Patentschriften US 4,675,234 A1, 4,634,602 A1,4,424,252 A1, 4,163,810 A1, 4,129,488 A1 oder 3,974,303 A1 verwiesen.

Die bei dem erfindungsgemäßen Verfahren verwendeten Beschichtungsstoffe, Klebstoffe und Dichtungsmassen können noch mindestens ein Vernetzungsmittel (B) mit im statistischen Mitteln mindestens zwei komplementären reaktiven funktionellen Gruppen (c) pro Molekül enthalten. Beispiele geeigneter Vernetzungsmittel (B) für die thermische Härtung sind Aminoplastharze, Anhydridgruppen und/oder Säuregruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie in der europäischen Patentschrift EP-A-0 596 460 beschrieben werden. Werden besonders reaktive Vernetzungsmittel (B) wie Polyisocyanate verwendet, werden sie im allgemeinen erst kurz vor der Applikation den betreffenden Beschichtungsstoffen, Klebstoffen und Dichtungsmassen zugesetzt, welche von der Fachwelt dann auch als Zweikomponentensysteme bezeichnet werden.

Sogenannte Einkomponentensysteme resultieren, wenn weniger reaktive Vernetzungsmittel (B) von Anfang an in den Beschichtungsstoffen, Klebstoffe und Dichtungsmassen enthalten sind. Art und Menge der Vernetzungsmittel (B) richten sich in erster Linie nach den in den Bestandteilen (A) enthaltenen komplementären reaktiven Gruppen (b) sowie deren Anzahl.

Darüber hinaus können die in dem erfindungsgemäßen Verfahren verwendeten Beschichtungsstoffe, Klebstoffe und Dichtungsmassen noch mindestens einen Zusatzstoff (C) enthalten, der aus der Gruppe, bestehend aus farb- und/oder effektgebenden Pigmenten, organischen und anorganischen, transparenten oder opaken Füllstoffen, Nanopartikeln, thermisch und/oder mit aktinischer Strahlung härtbaren Reaktiverdünnern, niedrig und hochsiedenden organischen Lösemitteln ("lange Lösemittel"), UV-Absorbern, Lichtschutzmitteln, Radikalfängern, thermolabilen radikalischen Initiatoren, Katalysatoren für die thermische Vernetzung, Entlüftungsmitteln, Slipadditiven, Polymerisationsinhibitoren, Entschäumern, Emulgatoren, Netz- und Dipergiermitteln, Haftvermittlern, Verlaufmitteln, filmbildenden Hilfsmitteln, Sag control agents (SCA), rheologiesteuernden Additiven (Verdicker), Flammschutzmitteln, Sikkativen, Trockwagsmitteln, Hautverhinderungsmitteln, Korrosionsinhibitoren, Wachsen und Mattierungsmitteln, ausgewählt wird.

Art und Menge der Zusatzstoffe (C) richten sich nach dem Verwendungszweck der mit Hilfe des erfindungsgemäßen Verfahrens hergestellten Beschichtungen, Klebstoffe und Dichtungen.

Dient beispielsweise das erfindungsgemäße Verfahren der Herstellung von Unidecklackierungen oder Basislackierungen, enthält der betreffende Beschichtungsstoff farb- und/oder effektgebende Pigmente (C) sowie gegebenenfalls opake Füllstoffe. Dient das erfindungsgemäße Verfahren beispielsweise der Herstellung von Klarlackierungen, sind diese Zusatzstoffe (C) naturgemäß in dem betreffenden Beschichtungsstoff nicht enthalten.

Beispiele geeigneter Effektpigmente (C) sind Metallplättchenpigmente wie handelsübliche Aluminiumbronzen, gemäß DE-A-36 36 183 chromatierte Aluminiumbronzen, und handelsübliche Edelstahlbronzen sowie nichtmetallische Effektpigmente, wie zum Beispiel Perlglanz- bzw. Interferenzpigment. Ergänzend wird auf Römpp Lexikon Lacke und Druckfarben, Georg Thieme Verlag, 1998, Seiten 176, »Effektpigmente« und Seiten 380 und 381, »Metalloxid-Glimmer-Pigmente« bis »Metallpigmente«, verwiesen.

Beispiele für geeignete anorganische farbgebende Pigmente (C) sind Titandioxid, Eisenoxide, Sicotransgelb und Ruß. Beispiele für geeignete organische farbgebende Pigmente (C) sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453, »Pigmente« bis »Pigmentsvolumenkonzentration«, Seite 563, »Thioindigo-Pigmente« und Seite 567, »Titandioxid-Pigmente« verwiesen.

Beispiele geeigneter organischer und anorganischer Füllstoffe (C) sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Beispiele geeigneter thermisch härtbarer Reaktiverdünner (C) sind stellungsisomere Diethyloctandiole oder Hydroxylgruppen enthaltende hyperverzweigte Verbindungen oder Dendrimere.

Beispiele geeigneter mit aktinischer Strahlung härtbarer Reaktivverdünner (C) sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter niedrigsiedender organischer Lösemittel (C) und hochsiedender organischer Lösemittel (C) ("lange Lösemittel") sind Ketone wie Methylethlyketon oder Methylisobutylketon, Ester wie Ethylacetat oder Butylacetat, Ether wie Dibutylether oder Ethylenglykol-, Diethylenglykol-, Propylenglykol-, Dipropylenglykol-, Butylenglykol- oder Dibutylenglykoldimethyl-, -diethyl- oder-dibutylether, N-Methylpyrrolidon oder Xylole oder Gemische aromatischer Kohlenwasserstoffe wie Solvent Naphtha@ oder Solvesso®.

Beispiele geeigneter Lichtschutzmittel (C) sind HALS-Verbindungen, Benztriazole oder Oxalanilide.

Beispiele geeigneter thermolabiler radikalischer Initiatoren (C) sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren (C) für die Vernetzung sind Dibutylzinndilaurat, Lithiumdecanoat oder Zinkoctoat.

Beispiele geeigneter Entlüftuns- oder Entgasungsmittel (C) sind Diazadicycloundecan oder Benzoin.

Beispiele geeigneter Emulgatoren (C) sind nicht ionische Emulgatoren, wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen.

Beispiele geeigneter Netzmittel (C) sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler (C) ist Tricyclodecandimethanol.

Beispiele für geeignete filmbildende Hilfsmittel (C) sind Cellulose-Derivate.

Beispiele geeigneter transparenter Füllstoffe (C) sind solche auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen.

Beispiele geeigneter Sag control agents (C) sind Harnstoffe, modifizierte Harnstoffe und/oder Kieselsäuren, wie sie beispielsweise in den Literaturstellen EP-A-192 304, DE-A-23 59 923, DE-A-18 05 693, WO 94/22968, DE-C-27 51 761, WO 97/12945 oder "farbe + lack", 11/1992, Seiten 829 ff., beschrieben werden.

Beispiel geeigneter rheologiesteuernder Additive (C) sind die aus den Patentschriften WO 94/22968, EP-A-0 276 501, EP-A-0 249 201 oder WO 97/12945 bekannten; vemetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

Ein Beispiel für ein geeignetes Mattierungsmittel (C) ist Magnesiumstearat.

Weitere Beispiele für die vorstehend aufgeführten Zusatzstoffe (C) sowie Beispiele geeigneter UV-Absorber, Radikalfänger, Verlaufmittel, Flammschutzmittel, Sikkative, Trocknungsmittel, Hautverhinderungsmittel, Korrosionsinhibitoren und Wachse (C) werden in dem Lehrbuch »Lackadditive« von Johan Bieleman, Wiley-VCH, Weinheim, New York, 1998, im Detail beschrieben.

Die Zusatzstoffe (C) werden in üblichen und bekannten, wirksamen Mengen verwendet.

Die Herstellung der Beschichtungsstoffe, Klebstoffe und Dichtungsmassen weist keine Besonderheiten auf, sondern erfolgt in üblicher und bekannter Weise durch Vermischen der vorstehend beschriebenen Bestandteile (A) sowie gegebenenfalls (B) und (C) in geeigneten Mischaggregaten wie Rührkessel, Dissolver, Rührwerksmühlen oder Extruder nach den für die Herstellung der jeweiligen Beschichtungsstoffen, Klebstoffe und Dichtungsmassen (1.1), (1.2), (1.3) oder (1.4) geeigneten Verfahren.

Die mit Hilfe des erfindungsgemäßen Verfahrens hergestellten Beschichtungen, insbesondere ein- und mehrschichtige Klarlackierungen und farb- und/oder effektgebende Lackierungen, sind, was Farbe, Effekt, Glanz und D.O.I. (distinctiveness of the reflected image) betrifft, von höchster optischer Qualität, haben eine glatte, Strukturfreie, harte, flexible und kratzfeste Oberfläche, sind geruchsfrei und witterungs-, chemikalien- und etch-beständig, vergilben nicht und zeigen keine Rißbildung und Delamination der Schichten.

Die mit Hilfe des erfindungsgemäßen Verfahrens hergestellten Klebschichten und Dichtungen sind auch unter extremen klimatischen Bedingungen von langer Lebensdauer und hoher Klebkraft bzw. Dichtungsfähigkeit.

Die grundierten oder ungrundierten Substrate, die in erfindungsgemäßer Verfahrensweise mit mindestens einer Beschichtung, Klebschicht und/oder Dichtung versehen worden sind, haben daher eine besonders hohe Gebrauchsdauer und einen besonders hohen Gebrauchswert, was sie für Hersteller, Anwender und Endverbraucher technisch und wirtschaftlich ganz besonders attraktiv macht.

### Beispiele und Vergleichsversuche

### Herstellbeispiel 1

### Die Herstellung eines radikalisch härtbaren Polyesters (A)

In einem Rührkolben mit Heizung und Rückflußkühler wurden eingewogen:

| | |
|---|---|
| 661,10 g Dicyclopentadien | (5,0 Mol) und |
| 490,30 g Maleinsäureanhydrid | (5,0 Mol). |

Die Mischung wurde unter einem leichten Stickstoffstrom auf 125°C erhitzt. Anschließend wurden über einen Tropftrichter während einer Stunde

| | |
|---|---|
| 95,00 g Wasser | (5,0 Mol + 5 g) |

zugegeben. Es wurde bei 125°C eine Stunde nachreagieren lassen. Es bildete sich die Monocarbonsäure der Formel:

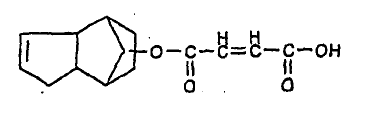

In einem weiteren Rührkolben mit Heizung und Destllieraufsatz wurden eingewogen:

| | |
|---|---|
| 240,00 g Dicyclohexanolpropan | (1 Mol), |
| 236,00 g Hexandiol 1,6 | (2 Mol), |
| 194,00 g Dimethylterephthalat | (1 Mol) und |
| 0,67 g Zinnacetat. | |

Es wurde unter einem leichten Stickstoffstrom rasch auf 120°C aufgeheizt. Dann wurde während 3 Stunden die Temperatur stufenweise auf 190°C erhöht; dabei wurde das entstehende Kondensationswasser abdestilliert. Es resultierte die Vorstufe 1

Die Monocarbonsäure wurde auf 90°C abgekühlt, und dann wurden dazugegeben:

| | |
|---|---|
| 516,80 g Vorstufe 1 | (2 Mol), |
| 116,00 g Fumarsäure | (1 Mol), |
| 4,00 g Dibutylzinndilaurat | und |
| 0,50 g Hydrochinon. | |

Es wurde unter einem leichten Stickstoffstrom rasch auf 130°C aufgeheizt. Dann wurde während 6 Stunden die Temperatur allmählich auf 190°C erhöht; dabei wurde das entstehende Kondensationswasser abdestilliert.

Es wurde der Polyester (A) mit einer Säurezahl von 17 erhalten, der beim Abkühlen erstarrte und nach dem Mahlen nicht verbackende Pulver ergab.

### Herstellbeispiel 2

### Die Herstellung eines radikalisch härtbaren Polyurethans (A)

In einem geeigneten Reaktionsgefäß, ausgestattet mit Rührer, Rückflußkühler, Heizung und Inertgaszufuhr wurden
14,76 g Trimethylolpropan,
236,36 g Hexandiol 1,6,
197,2 g Hydroxyethylacrylat und
0,56g 2,2,6,6-Tetramethyl-4-hydroxy-piperidin-N-oxid
vorgelegt und auf 60°C erhitzt. Zur Vorlage während einer Stunde 666 g Isophorondiisocyanat (IPDI) und 1,1g Dibutylzinndilaurat zudosiert. Durch die exotherme Reaktion stieg die Temperatur langsam bis auf 100°C. Man ließ die resultierende Reaktionsmischung noch während 30 Minuten bei 100°C nachreagieren, so daß keine freien Isocyanatgruppen mehr nachweisbar waren. Die Schmelze wurde auf eine Aluminiumfolie ausgegossen und abkühlen gelassen. Es resultierte ein hartes, gut mahlbares Harz.

### Herstellbeispiel 3

### Die Herstellung eines radikalisch härtbaren Polyurethans (A)

Das Herstellbeispiel 2 wurde wiederholt, nur daß anstelle der dort verwendeten Ausgangsprodukte die folgenden Ausgangsprodukte eingesetzt wurden:

| | |
|---|---|
| Vorlage | 62 g Ethylenglykol (1 Mol), |
| | 45 g Butandiol 1,4 (0,5 Mol), |
| | 232 g Hydroxyethylacrylat (2 Mol) und |
| | 0,4 g 2,2,6,6-Tetramethyl-4-hydroxy-piperidin-N-oxid. |
| Zulauf | 420,5 g Hexamethylendiisocyanat (2,5 Mol) und |
| | 1 g Dibutylzinndilaurat. |

Es resultierte ein hartes, trübes (kristallines) blockfestes Harz.

### Beispiele 1 und 2 und Vergleichsversuche V1 bis V5

### Die Herstellung von Beschichtungen nach dem erfindungsgemäßen Verfahren (Beispiele 1 und 2) und nach einem nicht erfindungsgemäßen Verfahren (Vergleichsversuche V1 bis V5)

Für die Vergleichsversuche V5 und V1 wurde das Harz gemäß Herstellbeispiel 1 verwendet.

Für das Beispiel 1 und den Vergleichsversuch V2 wurde das Harz gemäß Herstellbeispiel 2 verwendet.

Für das Beispiel 2 und die Vergleichsversuche V3 und V4 wurde das Harz gemäß Herstellbeispiel 3 verwendet.

Die Harze wurden grob in einer Schlagwerksmühle feingrießig gemahlen und nach Zugabe von, bezogen auf den resultierenden Beschichtungsstoff, 1,0 Gew.-% Benzoin (Entgasungsmittel), 0,5 Gew.-% eines handelsüblichen Verlaufmittels (Modaflow® 3) und 3 Gew.-% Dicumylperoxid weitervermahlen. Das jeweilige Mahlgut wurde dann in einem Laborextruder bei etwa 80°C homogenisiert, auf eine Aluminiumfolie ausgetragen, erneut durch Mahlen homogenisiert und hiernach auf eine Teilchengröße von max. 40 µm abgesiebt. Die resultierenden Pulverlacke 1, 2 und 3 wurden über ein Handsieb auf Birkensperrholz, das auf eine Waage aufgelegt war, in einer Menge aufgestreut, die für die Erzeugung von etwa 100 µm dicken Lackschichten ausreichte.

Das Aufschmelzen und die Härtung der resultierenden Pulverlackschichten V5, 1 und 2 erfolgten bei den Beispielen 1 bis 3 mit Hilfe einer NIR-Anlage der Firma IndustrieService. Die Tabelle 1 gibt einen Überblick über die angewandten Härtungsbedingungen und -zeiten sowie über die hierbei erhaltenen Ergebnisse.

Bei den Vergleichsversuchen V1 bis V4 erfolgten das Aufschmelzen und die Härtung der Pulverlackschichten V5, 1 und 2 mit Hilfe einer konventionellen langwelligen Infrarotlampe (Elstein-Dunkelstrahler mit einem Emissionsmaximum bei etwa 7.000 nm). Hierbei befand sich die Infrarotlampe zur Temperaturregulierung bei den Vergleichsversuchen V1 bis V3 in einem Abstand zwischen 80 und 120 cm von der Oberfläche der Pulverlackschichten. Bei dem Vergleichsversuch V4 befand sie sich in einem Abstand von 22 cm hiervon. Die Tabelle 2 gibt einen Überblick über die angewandten Härtungsbedingungen und -zeiten sowie über die hierbei erhaltenen Ergebnisse.

Die Ergebnisse der Tabellen 1 und 2 belegen, daß unter der langwelligen Infrarotlampe (Vergleichsversuche V1 bis V4) keine Härtungsbedingungen eingestellt werden konnten, unter denen die Pulverlackschichten gut durchvernetzten (MEK-Test: i.O), ohne daß das Holz zu gasen begann, wodurch blasige Beschichtungen resultierten. Es mußte daher mit geringer Energie, d.h. bei einem großen Lampenabstand, aufgeheizt werden, um eine Überhitzung zu vermeiden. Im Laufe der hieraus resultierenden vergleichsweise langen Aufheizzeiten setzte unerwünschterweise ein Gelieren der schmelzenden Pulverlackschichten ein. So erreichten sie vor ihrer Vernetzung keine vorteilhaft niedrige Schmelzeviskosität, weswegen schlecht verlaufene Beschichtungen mit ausgeprägter Orangenhautstruktur resultierten. Durch das erfindungsgemäße Verfahren (Beispiele 1 und 2) konnten diese Nachteile in vollem Umfang vermieden werden, und es resultierten sehr gut durchvernetzte Beschichtungen mit sehr gutem Verlauf und vorzüglichen optischen Eigenschaften.

**Tabelle 1:**

| **Die Herstellung von Beschichtungen in erfindungsgemäßer Verfahrensweise und die Eigenschaften der resultierenden Beschichtungen** | | | | | | |
|---|---|---|---|---|---|---|
| Beispiel | Aufschmelzzeit (s) | Oberflächentemperatur (°C) | Haltezeit (s) | Holzausgasung Ja/Nein | Oberflächenglätte i.O/n.i.O | MEK-Beständigkeit i.O/n.i.O. |
| V5 | 10 | 145 | 60 | Nein | i.O. | beinahe |
| | | | | | | i.O. |
| | 10 | 145 | 90 | Nein | i.O. | i.O. |
| | 10 | 160 | 60 | Nein | i.O. | i.O. |
| 1 | 10 | 145 | 30 | Nein | i.O. | beinahe |
| | | | | | | i.O. |
| | 10 | 145 | 45 | Nein | i.O. | i.O. |
| 2 | 10 | 145 | 30 | Nein | i.O. | beinahe |
| | | | | | | i.O. |
| | 10 | 145 | 45 | Nein | i.O. | i.O. |
| MEK-Beständigkeit: i.O. = keine Beschädigung der Beschichtung nach 50 Doppelhüben mit einem mit Methylethylketon getränkten Wattebausch; n.i.O. = deutliche Beschädigung der Beschichtung nach 50 Doppelhüben mit einem mit Methylethylketon getränkten Wattebausch; Oberflächenglätte: i.O. = keine Orangenhautstrukturen sichtbar; n.i.O. = ausgeprägte Orangenhautstruktur; | | | | | | |

**Tabelle 2:**

| **Die Herstellung von Beschichtungen in nicht erfindungsgemäßer Verfahrensweise und die Eigenschaften der resultierenden Beschichtungen** | | | | | | |
|---|---|---|---|---|---|---|
| Vergleichsversuch | Aufschmelzzeit (s) | Oberflächen temperatur (°C) | Haltezeit (s) | Holzausgasung Ja/Nein | Oberflächenglätte i.O/n.i.O. | MEK-Beständigkeit i.O/n.i.O. |
| V1 | 240 | 145 | 120 | Ja, m | n.i.O., lb | n.i.O. |
| | 240 | 145 | 240 | Ja, s | n.i.O., b | n.i.O. |
| | 240 | 145 | 300 | Ja, ss | n.i.O., sb | i.O. |
| | 180 | 160 | 180 | Ja, ss | n.i.O., sb | i.O. |
| | 300 | 135 | 300 | Ja, ms | n.i.O., b | n.i.O. |
| | 300 | 135 | 420 | Ja, s | n.i.O., sb | i.O. |
| | | | | | | |
| V2 | 240 | 145 | 90 | Ja, m | n.i.O., lb | beinahe i.O. |
| | 240 | 145 | 120 | Ja, s | n.i.O., b | i.O. |
| | 300 | 125 | 120 | Ja, m | n.i.O., lb | n.i.O. |
| | 300 | 125 | 240 | Ja, ms | n.i.O., b | beinahe i.O. |
| | | | | | | |
| V3 | 240 | 145 | 90 | Ja, m | n.i.O., lb | beinahe i.O. |
| | 240 | 145 | 120 | Ja, s | n.i.O., b | i.O. |
| | 300 | 125 | 120 | Ja, m | n.i.O., lb | n.i.O. |
| | 300 | 125 | 240 | Ja, ms | n.i.O. | beinahe i.O. |
| V4 | 35 ^{a)} | 174 ^{b)} | 30 | Ja, m | n.i.O., lb | n. i.O. ^{c)} |
| | 35 ^{a)} | 188 ^{b)} | 90 | Ja, s | n.i.O., sb | i.O. ^{c)} |
| | 35 ^{a)} | 201 ^{b)} | 120 | Ja, ss | n.i.O., sb | i.O. ^{c)} |
| MEK-Beständigkeit: i.O. = keine Beschädigung der Beschichtung nach 50 Doppelhüben mit einem mit Methylethylketon getränkten Wattebausch; n.i.O. = deutliche Beschädigung der Beschichtung nach 50 Doppelhüben mit einem mit Methylethylketon getränken Wattebausch; Oberflächenglätte: i.O. = keine Orangenhautstrukturen sichtbar; n.i.O. = ausgeprägte Orangenhautstruktur; Ib = leicht blasig; b = blasig; | | | | | | |

| | | | | | | |
|---|---|---|---|---|---|---|
| a) = Aufschmelztemperatur: 145°C; b) = Endtemperatur; c) = ungleichmäßige Durchhärtung über die Schichtdicke, Oberfläche z. T: gelblich bräunlich verfärbt; | | | | | | |

## Patentansprüche

1. Verfahren zur Herstellung von Beschichtungen, Klebschichten oder Dichtungen für grundierte oder ungrundierte Substrate, bei dem man
(1) mindestens einen radikalisch und/oder ionisch härtbaren Beschichtungsstoff und/oder Klebstoff und/oder mindestens eine radikalisch und/oder ionisch härtbare Dichtungsmasse, enthaltend mindestens einen Bestandteil (A), der im statistischen Mittel mindestens eine Gruppe (a) mit mindestens einer mit aktinischer Strahlung aktivierbaren Bindung pro Molekül enthält, wobei es sich bei den mit aktinischer Strahlung aktivierbaren Bindungen um Kohlenstoff-Kohlenstoff-Doppelbindungen handelt, in der Form
(1.1) einer wasserfreien und lösemittelfreien Flüssigkeit oder Schmelze,
(1.2) eines Pulvers,
(1.3) einer Dispersion oder einer Lösung in mindestens einem organischen Lösemittel oder
(1.4) einer Dispersion oder einer Lösung in einem wäßrigen Medium
auf und/oder in das grundierte oder ungrundierte Substrat appliziert,
(2) die resultierende Schicht aus einer Dispersion oder einer Lösung (1.3) oder (1.4) trocknet oder die resultierende Schicht der Schmelze (1.1) erstarren läßt oder durch Erhitzen weiterhin in geschmolzenem Zustand hält,
(3) die resultierende feste Schicht (1.2), (1.3) oder (1.4) durch Erhitzen aufschmilzt und
(4) die im Verfahrensschritt (1) resultierende flüssige oder die im Verfahrensschritt (2) oder (3) resultierende geschmolzene Schicht
(4.1) im flüssigen oder geschmolzenen Zustand,
(4.2) beim Erstarren und/oder
(4.3) nach dem Erstarren
mit naher Infrarotstrahlung (NIR-Strahlung) härtet,
ohne daß Photoinitiatoren und NIR-Strahlung absorbierende Farbstoffe zugegen sind, und
wobei die Gruppen (a) in dem Bestandteil (A) über Urethangruppen an die Grundstruktur gebunden sind.

2. Verfahren nach Anspruch 1, **dadurch gekennzeichnet, daß** das Erhitzen im Verfahrensschritt (2) mit Hilfe von NIR-Strahlung durchgeführt wird.

3. Verfahren nach Anspruch 1 oder 2, **dadurch gekennzeichnet, daß** das Erhitzen im Verfahrensschritt (3) mit Hilfe von NIR-Strahlung durchgeführt wird.

4. Verfahren nach einem der Ansprüche 1 bis 3, **dadurch gekennzeichnet, daß** man NIR-Strahlung einer Wellenlänge verwendet, für die die festen Schichten (1.2), (1.3) und (1.4), die Flüssigkeiten und Schmelzen (1.1) sowie die im Verfahrensschritt (4) resultierenden Schmelzen teilweise durchlässig sind.

5. Das Verfahren nach Anspruch 4, **dadurch gekennzeichnet, daß** die festen Schichten (1.2), (1.3) und (1.4) sowie die Flüssigkeiten und Schmelzen (1.1) sowie die im Verfahrensschritt (4) resultierenden Schmelzen die eingestrahlte NIR-Strahlung zu 20 bis 80% absorbieren.

6. Verfahren nach Anspruch 4 oder 5, **dadurch gekennzeichnet, daß** die NIR-Strahlung eine Wellenlänge von 600 bis 1.400 nm hat.

7. Verfahren nach einem der Ansprüche 1 bis 6, **dadurch gekennzeichnet, daß** man (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen verwendet.

8. Verfahren nach Anspruch 7, **dadurch gekennzeichnet, daß** man Acrylatgruppen verwendet.

9. Verfahren nach einem der Ansprüche 1 bis 8, **dadurch gekennzeichnet, daß** der Bestandteil (A) ein Feststoff ist.

10. Verfahren nach Anspruch 9, **dadurch gekennzeichnet, daß** der Bestandteil (A) amorph, teilkristallin oder kristallin ist.

11. Verfahren nach Anspruch 10, **dadurch gekennzeichnet, daß** die Grundstruktur des Bestandteils (A) niedermolekular, oligomer und/oder polymer ist.

12. Verfahren nach Anspruch 11, **dadurch gekennzeichnet, daß** die oligomere und/oder polymere Grundstruktur des Bestandteils (A) olefinisch ungesättigte Doppelbindungen enthält.

13. Verfahren nach Anspruch 11 oder 12, **dadurch gekennzeichnet, daß** die oligomere und/oder polymere Grundstruktur des Bestandteils (A) sich von statistisch, alternierend und/oder blockartig aufgebauten, linearen, verzweigten, hyperverzweigten, dendrimeren und/oder kammartig aufgebauten Polyadditionsharzen, Polykondensationsharzen und/oder (Co)Polymerisaten von ethylenisch ungesättigten Monomeren ableitet.

14. Verfahren nach Anspruch 13, **dadurch gekennzeichnet, daß** die (Co)Polymerisate Poly(meth)acrylate und/oder partiell verseifte Polyvinylester und die Polyadditionsharze und/oder Polykondensationsharze Polyester, Alkyde, Polyurethane, Polyester-polyurethane, Polylactone, Polycarbonate, Polyether, Polyether-Polyester, Epoxidharz-Amin-Addukte, Polyharnstoffe, Polyamide oder Polyimide, insbesondere Polyester, Polyester-Polyether, Polyurethane und Polyester-Polyurethane, sind.

15. Verfahren nach einem der Ansprüche 1 bis 14, **dadurch gekennzeichnet, daß** der Bestandteil (A) noch mindestens eine reaktive funktionelle Gruppen (b) enthält, die mit Gruppen (b) der eigenen Art und/oder mit komplementären reaktiven funktionellen Gruppen (c) thermische Vernetzungsreaktionen eingehen können.

16. Verfahren nach einem der Ansprüche 1 bis 15, **dadurch gekennzeichnet, daß** der Bestandteil (A) noch mindestens einen chemisch gebundenen Stabilisator (d) enthatten.

17. Verfahren nach Anspruch 16, **dadurch gekennzeichnet, daß** als chemisch gebundener Stabilisator (d) eine HALS-Verbindung verwendet wird.

18. Verfahren nach Anspruch 17, **dadurch gekennzeichnet, daß** als chemisch gebundene HALS-Verbindung (d) die 2,2,6,6-Tetramethylpiperidin-N-oxid-4-oxy-Gruppe verwendet wird.

19. Verfahren nach einem der Ansprüche 16 bis 18, **dadurch gekennzeichnet, daß** der Beschichtungsstoff, der Klebstoff oder die Dichtungsmasse mindestens ein Vernetzungsmittel (B) mit im statistischen Mittel mindestens zwei komplementären reaktiven funktionellen Gruppen (c) pro Molekül enthalten.

20. Verfahren nach einem der Ansprüche 16 bis 19, **dadurch gekennzeichnet, daß** der Beschichtungsstoff, der Klebstoff oder die Dichtungsmasse mindestens einen Zusatzstoff (C) enthalten.

21. Verfahren nach einem der Ansprüche 16 bis 20, **dadurch gekennzeichnet, daß** der lösemittelfreie oder wasserfreie Bestandteil (A) ein Schmelzintervall oder einen Schmelzpunkt im Temperaturbereich von 40 bis 130°C aufweist.

22. Verfahren nach einem der Ansprüche 16 bis 21, **dadurch gekennzeichnet, daß** der lösemittelfreie oder wasserfreie Bestandteil (A) bei 130°C eine Schmelzeviskosität von 50 bis 20.000 mPas aufweist.

23. Grundierte und ungrundierte Substrate, enthaltend mindestens eine Beschichtung, mindestens eine Klebschichten und/oder mindestens eine Dichtung, herstellbar nach dem Verfahren gemäß einem der Ansprüche 16 bis 22.

24. Grundierte und ungrundierte Substrate nach Anspruch 23, **dadurch gekennzeichnet, daß** es sich um Kraftfahrzeugkarosserien, Möbel oder industrielle Bauteile, inklusive Coils, Container und elektrotechnische Bauteile handelt.

## Claims

1. A process for producing coatings, adhesive films or seals for primed or unprimed substrates, which comprises
(1) applying at least one free-radically and/or ionically curable coating material and/or adhesive and/or sealing compound comprising at least one constituent (A) containing on average per molecule at least one group (a) containing at least one bond which can be activated with actinic radiation, the bonds which can be activated with actinic radiation being carbon-carbon double bonds,
(1.1) a water-free and solvent-free liquid or melt,
(1.2) a powder,
(1.3) a dispersion or a solution in at least one organic solvent, or
(1.4) a dispersion or a solution in an aqueous medium
to and/or into the primed or unprimed substrate,
(2) drying the resultant layer of a dispersion or a solution (1.3) or (1.4) or causing the resultant layer of the melt (1.1) to solidify or maintaining it in a melted state by heating,
(3) melting, by heating, the resultant solid layer (1.2), (1.3) or (1.4), and
(4) curing the liquid layer resulting from step (1) of the process or the melted layer resulting from step (2) or (3) of the process
(4.1) in the liquid or melted state,
(4.2) during solidification, and/or
(4.3) after solidification
with near infrared (NIR) radiation,
without photoinitiators and colourants which absorb NIR radiation being present and
with the groups (a) in the constituent (A)
being attached to the parent structure by way of urethane groups.

2. The process as claimed in claim 1, wherein the heating in step (2) is carried out with the aid of NIR radiation.

3. The process as claimed in claim 1 or 2, wherein the heating in step (3) is carried out with the aid of NIR radiation.

4. The process as claimed in any of claims 1 to 3, using NIR radiation of a wavelength for which the solid layers (1.2), (1.3) and (1.4), the liquids and melts (1.1), and the melts resulting from step (4) are partly transparent.

5. The process as claimed in claim 4, wherein the solid layers (1.2), (1.3) and (1.4), the liquids and melts (1.1), and the melts resulting from step (4) absorb from 20 to 80% of the irradiated NIR radiation.

6. The process as claimed in claim 4 or 5, wherein the NIR radiation has a wavelength of from 600 to 1400 nm.

7. The process as claimed in any of claims 1 to 6, wherein (meth)acrylate, ethacrylate, crotonate, cinnamate, vinyl ether, vinyl ester, dicyclopentadienyl, norbornenyl, isoprenyl, isopropenyl, allyl or butenyl groups; dicyclopentadienyl ether, norbornenyl ether, isoprenyl ether, isopropenyl ether, allyl ether or butenyl ether groups; or dicyclopentadienyl ester, norbornenyl ester, isoprenyl ester, isopropenyl ester, allyl ester or butenyl ester groups are used.

8. The process as claimed in claim 7, wherein acrylate groups are used.

9. The process as claimed in any of claims 1 to 8, wherein the constituent (A) is a solid.

10. The process as claimed in claim 9, wherein the constituent (A) is amorphous, partially crystalline, or crystalline.

11. The process as claimed in claim 10, wherein the parent structure of the constituent (A) is of low molecular mass, oligomeric and/or polymeric.

12. The process as claimed in claim 11, wherein the oligomeric and/or polymeric parent structure of the constituent (A) comprises olefinically unsaturated double bonds.

13. The process as claimed in claim 11 or 12, wherein the oligomeric and/or polymeric parent structure of the constituent (A) is derived from random, alternating and/or block, linear, branched, hyperbranched, dendrimeric and/or comb polyaddition resins, polycondensation resins and/or (co)polymers of ethylenically unsaturated monomers.

14. The process as claimed in claim 13, wherein the (co)polymers are poly(meth)acrylates and/or partially saponified polyvinyl esters and the polyaddition resins and/or polycondensation resins are polyesters, alkyds, polyurethanes, polyester-polyurethanes, polylactones, polycarbonates, polyethers, polyester-polyethers, epoxy resin-amine adducts, polyureas, polyamides or polyimides, especially polyesters, polyester-polyethers, polyurethanes, and polyester-polyurethanes.

15. The process as claimed in any of claims 1 to 14, wherein the constituent (A) further comprises at least one reactive functional group (b) which with groups (b) of its own kind and/or with complementary reactive functional groups (c) is able to enter into thermal crosslinking reactions.

16. The process as claimed in any of claims 1 to 15, wherein the constituent (A) further comprises at least one chemically bonded stabilizer (d).

17. The process as claimed in claim 16, wherein a HALS compound is used as chemically bonded stabilizer (d).

18. The process as claimed in claim 17, wherein the 2,2,6,6-tetramethylpiperidine N-oxide-4-oxy group is used as chemically bonded HALS compound (d).

19. The process as claimed in any of claims 16 to 18, wherein the coating material, the adhesive or the sealing compound comprises at least one crosslinking agent (B) containing on average per molecule at least two complementary reactive functional groups (c).

20. The process as claimed in any of claims 16 to 19, wherein the coating material, the adhesive or the sealing compound comprises at least one additive (C).

21. The process as claimed in any of claims 16 to 20, wherein the solvent-free or water-free constituent (A) has a melting range or a melting point in the temperature range from 40 to 130°C.

22. The process as claimed in any of claims 16 to 21, wherein the solvent-free or water-free constituent (A) has a melt viscosity at 130°C of from 50 to 20 000 mPas.

23. A primed or unprimed substrate comprising at least one coating, at least one adhesive film and/or at least one seal which can be produced by the process as claimed in any of claims 16 to 22.

24. The primed or unprimed substrate as claimed in claim 23, selected from motor vehicle bodies, furniture or industrial components, including coils, containers, and electrical components.

## Revendications

1. Procédé pour la préparation de revêtements, de couches adhésives ou de joints pour des substrats apprêtés ou non apprêtés, dans lequel
(1) on applique sur et/ou dans le substrat apprêté ou non apprêté au moins un produit de revêtement et/ou au moins un adhésif et/ou au moins une masse d'étanchéité, durcissables par voie radicalaire et/ou ionique, contenant au moins un constituant (A) qui présente en moyenne statistique par molécule au moins un groupe (a) avec au moins une liaison activable par un rayonnement actinique, les liaisons activables par un rayonnement actinique étant des doubles liaisons carbone-carbone, sous forme
(1.1) d'un liquide ou d'une masse fondue exempt(e) d'eau et de solvant,
(1.2) d'une poudre,
(1.3) d'une dispersion ou d'une solution dans au moins un solvant organique ou
(1.4) d'une dispersion ou d'une solution dans un milieu aqueux,
(2) on sèche la couche obtenue à partir d'une dispersion ou d'une solution (1.3) ou (1.4) ou on laisse se solidifier la couche obtenue à partir de la masse fondue (1.1) ou on continue à la maintenir à l'état fondu par chauffage,
(3) on fond la couche solide obtenue (1.2), (1.3) ou (1.4) par chauffage et
(4) on durcit la couche liquide obtenue dans l'étape de procédé (1) ou la couche fondue obtenue dans l'étape de procédé (2) ou (3)
(4.1) à l'état liquide ou fondu,
(4.2) lors de la solidification et/ou
(4.3) après la solidification
avec un rayonnement infrarouge proche (rayonnement NIR),
sans que des photoinitiateurs et des colorants qui absorbent le rayonnement NIR soient présents et
d'où les groupes (a) dans le constituant (A) sont liés à la structure de base via des groupes uréthane.

2. Procédé selon la revendication 1, **caractérisé en ce que** le chauffage dans l'étape de procédé (2) est réalisé à l'aide d'un rayonnement NIR.

3. Procédé selon la revendication 1 ou 2, **caractérisé en ce que** le chauffage dans l'étape de procédé (3) est réalisé à l'aide d'un rayonnement NIR.

4. Procédé selon l'une quelconque des revendications 1 à 3, **caractérisé en ce qu'**on utilise un rayonnement NIR d'une longueur d'onde pour laquelle les couches solides (1.2), (1.3) et (1.4), les liquides et masses fondues (1.1) ainsi que les masses fondues obtenues dans l'étape de procédé (4) sont partiellement transparentes.

5. Procédé selon la revendication 4, **caractérisé en ce que** les couches solides (1.2), (1.3) et (1.4) ainsi que les liquides et masses fondues (1.1) ainsi que les masses fondues obtenues dans l'étape de procédé (4) absorbent 20 à 80% du rayonnement NIR irradié.

6. Procédé selon la revendication 4 ou 5, **caractérisé en ce que** le rayonnement NIR présente une longueur d'onde de 600 à 1400 nm.

7. Procédé selon l'une quelconque des revendications 1 à 6, **caractérisé en ce qu'**on utilise des groupes (méth)acrylate, éthacrylate, crotonate, cinnamate, vinyléther, ester de vinyle, dicyclopentadiényle, norbornényle, isoprényle, isopropényle, allyle ou butényle ; des groupes dicyclopentadiényléther, norbornényléther, isoprényléther, isopropényléther, allyléther ou butényléther ou des groupes ester de dicyclopentadiényle, de norbornényle, d'isoprényle, d'isopropényle, d'allyle ou de butényle.

8. Procédé selon la revendication 7, **caractérisé en ce qu'**on utilise des groupes acrylate.

9. Procédé selon l'une quelconque des revendications 1 à 8, **caractérisé en ce que** le constituant (A) est un solide.

10. Procédé selon la revendication 9, **caractérisé en ce que** le constituant (A) est amorphe, partiellement cristallin ou cristallin.

11. Procédé selon la revendication 10, **caractérisé en ce que** la structure de base du constituant (A) est un polymère de bas poids moléculaire, oligomère et/ou polymère.

12. Procédé selon la revendication 11, **caractérisé en ce que** la structure de base oligomère et/ou polymère du constituant (A) contient des doubles liaisons oléfiniquement insaturées.

13. Procédé selon la revendication 11 ou 12, **caractérisé en ce que** la structure de base oligomère et/ou polymère du constituant (A) est dérivée de résines de polyaddition, de polycondensation et/ou de (co)polymères de monomères éthyléniquement insaturés à structure statistique, alternée et/ou à blocs, linéaire, ramifiée, hyperramifiée, dendrimère et/ou en peigne.

14. Procédé selon la revendication 13, **caractérisé en ce que** les (co)polymères sont des poly(méth)acrylates et/ou des poly(esters de vinyle) partiellement saponifiés et les résines de polyaddition et/ou les résines de polycondensation des polyesters, des alkydes, des polyuréthanes, des polyester-polyuréthanes, des polylactones, des polycarbonates, des polyéthers, des polyéther-polyesters, des produits d'addition de résine d'époxyde et d'amine, des polyurées, des polyamides ou des polyimides, en particulier des polyesters, des polyester-polyéthers, des polyuréthanes et des polyester-polyuréthanes.

15. Procédé selon l'une quelconque des revendications 1 à 14, **caractérisé en ce que** le constituant (A) contient encore au moins un groupe fonctionnel réactif (b) qui peut participer à des réactions de réticulation thermique avec les groupes (b) du même type et/ou avec des groupes fonctionnels réactifs (c) complémentaires.

16. Procédé selon l'une quelconque des revendications 1 à 15, **caractérisé en ce que** le constituant (A) contient encore au moins un stabilisant (d) lié chimiquement.

17. Procédé selon la revendication 16, **caractérisé en ce qu'**on utilise comme stabilisant (d) lié chimiquement un composé HALS.

18. Procédé selon la revendication 17, **caractérisé en ce qu'**on utilise comme composé (d) HALS lié chimiquement le groupe 2,2,6,6-tétraméthyl-pipéridine-N-oxyde-4-oxy.

19. Procédé selon l'une quelconque des revendications 16 à 18, **caractérisé en ce que** le produit de revêtement, l'adhésif ou la masse d'étanchéité contient au moins un réticulant (B) avec en moyenne statistique par molécule au moins deux groupes fonctionnels réactifs (c) complémentaires.

20. Procédé selon l'une quelconque des revendications 16 à 19, **caractérisé en ce que** le produit de revêtement, l'adhésif ou la masse d'étanchéité contient au moins un additif (C).

21. Procédé selon l'une quelconque des revendications 16 à 20, **caractérisé en ce que** le constituant (A) exempt de solvant ou d'eau présente un intervalle de fusion ou un point de fusion dans la plage de température de 40 à 130°C.

22. Procédé selon l'une quelconque des revendications 16 à 21, **caractérisé en ce que** le constituant (A) exempt de solvant ou d'eau présente, à 130°C, une viscosité de masse fondue de 50 à 20 000 mPa.s.

23. Substrats apprêtés et non apprêtés, contenant au moins un revêtement, au moins une couche adhésive et/ou au moins un joint, pouvant être préparé selon le procédé selon l'une quelconque des revendications 16 à 22.

24. Substrats apprêtés et non apprêtés selon la revendication 23, **caractérisés en ce qu'**il s'agit de carrosseries de véhicules, de meubles ou de pièces industrielles, y compris des bandes, des conteneurs et des pièces électrotechniques.
